# EUROPÄISCHE PATENTSCHRIFT

(11) **EP 2 989 638 B1**
(45) Veröffentlichungstag und Bekanntmachung des Hinweises auf die Patenterteilung: **04.10.2017**
(21) Anmeldenummer: 14715228.4
(22) Anmeldetag: 24.03.2014
(51) Int. Cl.: G21C 9/004, G21C 17/028, G21D 3/04, G01N 1/22, G21C 17/04, G21C 17/10, G21C 19/303, G01N 1/10, G01N 1/24

(54) **KERNKRAFTWERK MIT EMISSIONSÜBERWACHUNGSSYSTEM EINES VENTINGSYSTEMS**
NUCLEAR POWER PLANT WITH EMISSION MONITORING SYSTEM OF A VENTING SYSTEM
CENTRALE NUCLÉAIRE AVEC SYSTÈME DE SURVEILLANCE D'ÉMISSIONS D'UN SYSTÈME DE VENTILATION

(30) Priorität: 25.04.2013 DE 102013207595
(43) Veröffentlichungstag der Anmeldung: 02.03.2016
(73) Patentinhaber: AREVA GmbH, 91052 Erlangen (DE)
(72) Erfinder: HILL, Axel, 64589 Stockstadt (DE)
(74) Vertreter: Kugler, Jörg
(86) Internationale Anmeldenummer: PCT/EP2014/055804
(87) Internationale Veröffentlichungsnummer: WO 2014/173594

(56) Entgegenhaltungen:
- JP-A- 2012 230 057
- US-A- 5 267 282
- US-A1- 2008 175 345

## Beschreibung

Die Erfindung betrifft ein Kernkraftwerk mit einem Ventingsystem und mit einem Emissionsüberwachungssystem für das Ventingsystem.

Ein derartiges Kernkraftwerk mit den Merkmalen des Oberbegriffs von Anspruch 1 ist aus US 5 267 282 A bekannt. Weitere Kernkraftwerke mit Emissionsüberwachungssystemen oder Probenahmesystemen sind aus US 2008 / 175345 A1 oder JP 2012 / 230057 A bekannt.

In einem schweren Störfall (engl. Severe Accident) eines Kernkraftwerks kann es neben der Freisetzung von Dampf zur Freisetzung großer Mengen Wasserstoff, insbesondere durch die bekannte Zirkon-Wasserreaktion kommen. Ohne wirksame Gegenmaßnahmen sind explosible (auch detonationsfähige) Gemische, die bei einer unkontrollierten Reaktion das Containment gefährden, nicht auszuschließen. Des Weiteren kommt es insbesondere bei relativ kleinen inertisierten Siedewasserreaktor-Containments (typische Volumina 5.000 - 15.000 m³) durch die Freisetzung des nicht-kondensierbaren Wasserstoffs zusammen mit Dampf zu einem schnellen Druckanstieg, der über den Auslegungsdruck hinausgehen und bis zum Versagensdruck des Containments gehen kann.

Um ein Überdruckversagen des Containments zu verhindern, sind die Anlagen seit einiger Zeit mit einer gefilterten Druckentlastung ausgerüstet. Trotz der Filterung kommt es bei der Druckentlastung in einem gewissen Umfang zu einer Freisetzung von Radioaktivität in die Umwelt. Diese Freisetzung wird üblicherweise von einem Emissionsüberwachungssystem gemessen und aufgezeichnet. Die ermittelten Daten werden zur Information der Bevölkerung und zur Ableitung von Störfallmaßnahmen verwendet.

Die zurzeit installierten Emissionsüberwachungssysteme benötigen zum Betrieb eine quantitativ erhebliche Energieeinspeisung zum Beheizen der Probenahmeleitungen zur Vermeidung von Kondensation und Ablagerung von Aerosolen. Weiterhin wird Energie für den Probentransport zu den Filtern und den Betrieb der Analysatoren benötigt. Die Energieversorgung (ca. 4 - 8 KW) kann zurzeit nur über das Notstromdieselnetz sichergestellt werden. Eine wünschenswerte alleinige Versorgung über Batterien ist durch die benötigte Batteriekapazität schwer zu realisieren. Sie würde nämlich einen einen hohen Aufwand an Batterien und Raum erfordern. Weiterhin sind die Anlagen für Erdbebenlasten zu qualifizieren, was wegen der Dieselaggregate und der zugehörigen Treibstofftanks und Aufstellungsräume aufwendig ist. Für Störfallverläufe mit völligem Ausfall der kraftwerksinternen Energieversorgung (engl. SBO = Station Blackout) stehen die gegenwärtig installierten Systeme zum Monitoring nicht oder nur eingeschränkt zur Verfügung.

Der vorliegenden Erfindung liegt die Aufgabe zugrunde, diesbezüglich Abhilfe zu schaffen und ein Kernkraftwerk mit einem Emissionsüberwachungssystem der eingangs genannten Art anzugeben, das bei hoher Zuverlässigkeit, Verfügbarkeit und Qualität der Messergebnisse für einen besonders geringen Verbrauch an elektrischer Energie ausgelegt ist.

Die Aufgabe wird erfindungsgemäß gelöst durch die Merkmale des Anspruchs 1.

Vorteilhafte Ausgestaltungen und Weiterentwicklungen des Grundkonzepts sind Gegenstand der Unteransprüche sowie der nachfolgenden detaillierten Beschreibung.

Mit dem erfindungsgemäßen System kann eine Emissionsüberwachung auch bei SBO-Ereignissen durchgeführt werden. Das beanspruchte Emissionsüberwachungssystem nutzt in vorteilhafter Weise den thermohydraulischen Energieinhalt des Venting-Abgasstromes zur Probenförderung und Eigenmediumbeheizung zur Verhinderung von Kondensation in den Probenahmeleitungen. Das optimierte Energieversorgungskonzept ermöglicht eine Batteriepufferung vom Ausfall der normalbetrieblichen Stromversorgung bis zur passiven Energieversorgung nach dem Start des Containment-Ventingprozesses.

Wesentliche Vorteile aus Anwender- bzw. Betreibersicht sind zusammengefasst:
- Autarke Abwicklung von Mess- und Überwachungsaufgaben hinsichtlich gasförmiger Emissionen (Abgas-Monitoring) auch im Fall von SBO
- Informationen zur Aktivitätsfreisetzung stehen auch bei SBO zur Verfügung
- Information zur Ableitung von Störfallmaßnahmen vorhanden
- Geringer Energieverbrauch für den Betrieb der Online-Monitore (Jod, Aerosol, Edelgase)
- Energieversorgung durch Batteriespeicher möglich
- Geringe Batteriekapazität erforderlich
- Geringer Platzbedarf für die Energieversorgung des Systems
- Das Emissionsüberwachungssystem nimmt eine repräsentative Probe, die proportional zu der Strömungsrate des Ventingsystems ist.
- Eine Regelung des Probenstroms kann entfallen.
- Ein aktives Einschalten der Probeentnahme kann entfallen, da die Probenentnahme durch den Ventingstrom passiv selbstregelnd erfolgt.

Mehrere Ausführungsbeispiele der Erfindung werden nachfolgend anhand der Zeichnungen näher erläutert. Dabei zeigen in jeweils stark vereinfachter und schematisierter Darstellung:
- FIG. 1: ein Prinzipschaltbild eines Emissionsüberwachungssystems für ein Ventingsystem eines Kernkraftwerks in einer ersten Variante, und
- FIG. 2: ein Prinzipschaltbild eines Emissionsüberwachungssystems für ein Ventingsystem eines Kernkraftwerks in einer zweiten Variante.

Gleiche oder gleich wirkende Teile sind in beiden Figuren mit denselben Bezugszeichen versehen.

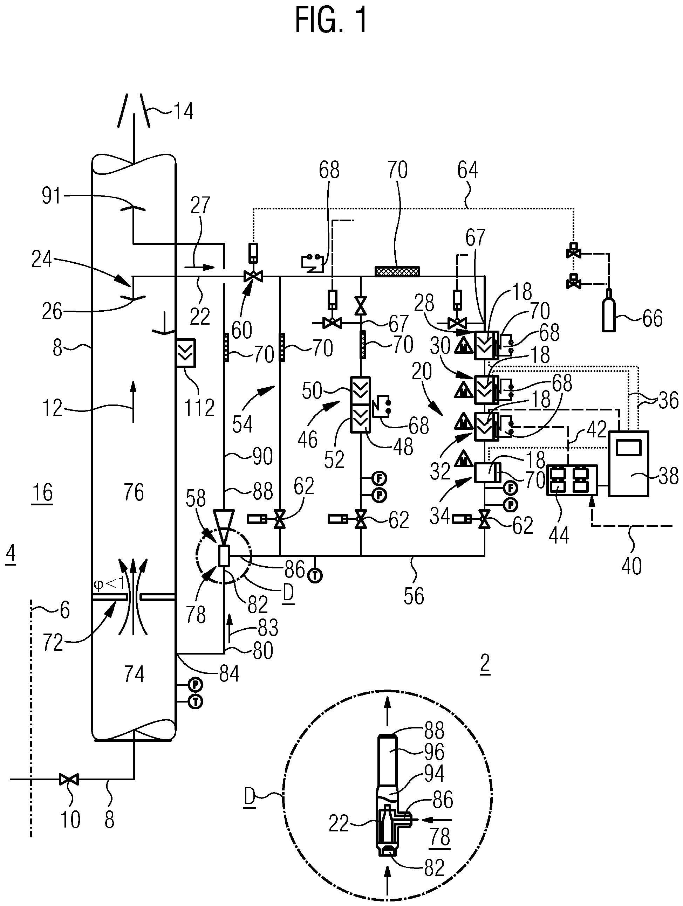

Das in FIG. 1 in einem schematischen Überblick dargestellte Emissionsüberwachungssystem 2 dient zur Messung und Überwachung der überwiegend gasförmigen Emissionen, die beim sogenannten Venting eines Kernkraftwerkes 4 in die Umgebung entlassen werden, insbesondere im Hinblick auf deren radiologische Aktivität.

Als Venting bezeichnet man in diesem Zusammenhang den kontrollierten Druckabbau innerhalb des auch als Containment bezeichneten, hier nur schematisch und ausschnittsweise dargestellten Sicherheitsbehälters 6 eines Kernkraftwerks 4 bei schweren Störfällen mit massiver Dampf- und Gasfreisetzung innerhalb des Sicherheitsbehälters 6 mit entsprechend hohem Überdruck gegenüber der äußeren Umgebungsatmosphäre. Zu diesem Zweck ist eine auch als Ventleitung bezeichnete Druckentlastungsleitung 8 aus dem Sicherheitsbehälter 6 herausgeführt, die im Normalbetrieb des Kernkraftwerks 4 durch eine Absperrarmatur 10 verschlossen ist. Zur Einleitung der Druckentlastung wird die Absperrarmatur 10 geöffnet, so dass sich entlang der Strömungsrichtung 12 ein überwiegend gasförmiger Druckentlastungsstrom ausbildet, der über einen Kamin 14 oder dergleichen in die Umgebung entlassen wird. Dadurch wird der Überdruck im Containment auf unterkritische Werte abgesenkt.

Um beim Venting eine Kontamination der Umgebung möglichst gering zu halten, sind insbesondere stromaufwärts, ggf. auch stromabwärts des hier vergrößert herausgegriffenen Abschnitts der Druckentlastungsleitung 8 üblicherweise verschiedene Filter- und/oder Wäschereinrichtungen, insbesondere Trockenfilter, Nasswäscher und/oder Sorbensfilter, für den auch als Ventstrom bezeichneten Druckentlastungsstrom in die Druckentlastungsleitung 8 geschaltet. Man spricht von Filtered Containment Venting. Derartige Einrichtungen (nicht dargestellt) sind für eine weitgehende Rückhaltung von im Ventstrom enthaltenen radioaktiven Aktivitäten, insbesondere in Gestalt von Edelgasen, Jod und Jodverbindungen sowie Aerosolen ausgelegt. Die Gesamtheit aller für den Ventbetrieb vorgesehenen Komponenten wird auch als Ventingsystem 16 bezeichnet.

Dennoch kann nicht ganz ausgeschlossen werden, dass in bestimmten Störfallszenarien nennenswerte Aktivitätsmengen zusammen mit dem Ventstrom in die Umgebung entweichen, insbesondere bei Altanlagen mit unzureichenden Rückhalteeinrichtungen. In diesem Fall droht eine zumindest vorübergehende Kontamination des Kraftwerksgeländes, die bei der Planung und Koordinierung von Rettungsmaßnahmen berücksichtigt werden sollte. Zu diesem Zweck ist das Emissionsüberwachungssystem 2 vorgesehen, welches eine Gasprobe aus dem Ventstrom entnimmt und einer Anzahl von Analysatoren 18 zuführt. Die vorzugsweise im Durchflussbetrieb arbeitenden Analysatoren 18 nehmen bevorzugt in Echtzeit ("online Monitoring") oder jedenfalls zeitnah eine Messung des aktuellen Gehalts von Edelgasen, Jod und Jodverbindungen sowie Aerosolen in der Gasprobe vor und/oder ermitteln die auf diese Bestandteile zurückzuführende radiologische Aktivität. Weiterhin können beispielsweise Gasanalysatoren zur Bestimmung der Wasserstoff-Konzentration in die Analysenstrecke 20 integriert werden.

Konkret ist dazu eine Probeentnahmeleitung oder kurz Probenahmeleitung 22 aus der den Ventstrom führenden Druckentlastungsleitung 8 herausgeführt und an eine außerhalb der Druckentlastungsleitung 8 angeordnete Analysestrecke 20 angeschlossen bzw. mit ihr verbunden. Eingangsseitig ist die Probenahmeleitung 22 mit einer innerhalb der Druckentlastungsleitung 8 angeordneten Entnahmedüse 24 bzw. Sonde versehen, die eine in den Ventstrom hineinragende Einlassöffnung 26 aufweist. Alternativ kommt auch eine einfache Leitungsabzweigung von der Druckentlastungsleitung 8 in Betracht. Auf diese Weise wird also ein Teil des Ventstroms als Probenstrom in Strömungsrichtung 27 durch die Probenahmeleitung 22 der Analysenstrecke 20 zugeführt.

Die Analysenstrecke 20 ist hier im Ausführungsbeispiel mit mehreren der bereits genannten, echtzeitfähigen Analysatoren 18 bestückt, und zwar einem Aerosolanalysator 28, einem Jod- bzw. Jodverbindungsanalysator 30, einem Edelgasanalysator 32 und einem Wasserstoffanalysator 34, die alle nach dem Durchflussprinzip arbeiten und strömungsmäßig in Reihe geschaltet sind. Es versteht sich, dass andere und/oder zusätzliche Analysatoren 18 vorhanden sein können, und dass alternativ zur Reihenschaltung eine Parallelschaltung von Analysatoren 18 oder eine Kombination beider Leitungstopologien realisiert sein kann. Hierzu sind ggf. entsprechende Leitungsverzweigungen und Vereinigungen vorhanden.

Zusätzlich / alternativ können direkt an / in der Druckentlastungsleitung 8 derartige Analysatoren für ein Online-Monitoring, insbesondere in Bezug auf Jod- und Aerosolbestandteile des Ventstroms, angebracht sein. In der Druckentlastungsleitung 8, bevorzugt in deren Niederdruckabschnitt 76 (siehe unten), befindet sich hierzu beispielsweise ein Ausbaustück mit reduzierter Wandstärke (ca. 3 mm), um durch die reduzierte Abschirmung die Sensitivität des auf der Außenseite angebrachten Aerosol-/Jodmonitors 112 zu erhöhen

Die Analysatoren 18 übermitteln hier im Ausführungsbeispiel die aufgenommenen Messdaten über zugehörige Signalleitungen 36 an eine gemeinsame Steuer- und (Vor-) Auswerteeinheit 38, die beispielsweise in einer Notfallwarte des Kernkraftwerks 4 installiert sein kann. Alternativ können mehrere dezentrale Auswerteeinheiten installiert sein. Unter Umständen kann die Funktion dieser Einheit auf eine Datensammlung und ggf. eine Datenaufbereitung beschränkt sein, so dass die eigentliche Auswertung in einer nachgeschalteten, hier nicht dargestellten Einheit erfolgt. Zusätzlich kann eine Fernübertragung von rohen und/oder aufbereiteten Messdaten mittels Telemetrie oder dergleichen an eine externe Beobachtungsstation vorgesehen sein.

Die Stromversorgung der Steuer- und Auswerteeinheit 38 und - falls erforderlich - der einzelnen Analysatoren 18 erfolgt bei intakter Eigenstromversorgung des Kernkraftwerks 4 über das gewöhnliche Anlagenstromnetz 40 und bei dessen Ausfall über ein autarkes Notstromnetz 42, das vorzugsweise nach dem Prinzip einer Unterbrechungsfreien Stromversorgung (USV) im Bedarfsfall aktiviert wird. Das Notstromnetz wird vorzugsweise durch wiederaufladbare Batterien / Akkumulatoren 44 bespeist, die bei intaktem Anlagenstromnetz 40 über selbiges nachgeladen werden, kann aber auch eine Brennstoffzelleneinheit und/oder ein Dieselaggregat aufweisen.

Im Ausführungsbeispiel gemäß FIG. 1 ist in strömungsmäßiger Parallelschaltung zur Analysenstrecke 20 eine Filterstrecke 46 mit einer Anzahl von Filtern / Sammlern 48 an die Probenahmeleitung 22 angeschlossen. Sie ist beispielsweise mit einen Aerosolfilter 50 und einem Jodfilter / Jodverbindungsfilter 52 bestückt. Die Filterstrecke 46 wird also von einem Teilstrom des über die Probenahmeleitung 22 entnommenen Probenstroms durchströmt. Für die Filter / Sammler 48 der Filterstrecke 46 ist keine Online-Messung vorgesehen; vielmehr können sie während des Ventbetriebes oder zumindest nach dem Abklingen des Störfalls entnommen und hinsichtlich der zurückgehaltenen Aktivitätsträger untersucht werden. Selbst bei Totalausfall der Online-Analysatoren 18 ist somit noch eine nachträglich auswertbare, summarische Dokumentation der durch das Venting freigesetzten Emissionen ermöglicht.

Zusätzlich oder alternativ zu den genannten Filtern können beispielsweise Filter / Sammler für H-3 (Tritium) und C-14 (Kohlenstoff) in die Filterstrecke 46 geschaltet sein.

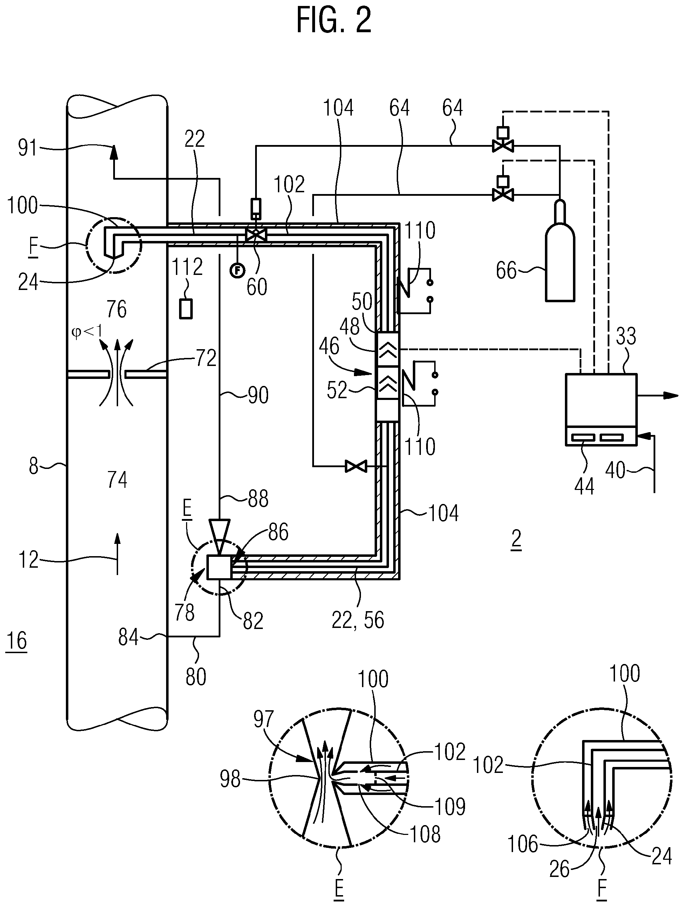

Weiterhin ist in strömungsmäßiger Parallelschaltung zur Analysenstrecke 20 und zur Filterstrecke 46 eine Bypassstrecke 54 vorhanden. Ausgangsseitig münden alle drei Teilleitungen in eine gemeinsame Sammelleitung oder Proberückleitung 56, in die weiter stromabwärts eine weiter unten noch näher zu beschreibende Saugpumpe 58 oder Vakuumpumpe geschaltet ist. Alternativ zur hier gewählten Nomenklatur könnte man übrigens auch das gesamte Leitungsnetz des Probenahme- und Analysesystems zwischen der Entnahmedüse 24 und der Saugpumpe 58 vereinfacht als Probenahmeleitung bezeichnen. Von dieser alternativen Nomenklatur wird weiter unten im Zusammenhang mit der FIG. 2 Gebrauch gemacht, unter anderem weil dort weniger Teilleitungen bzw. Leitungsabschnitte begrifflich zu unterscheiden sind.

Zur Einstellung bzw. Steuerung oder Regelung der verschiedenen Teilströme sind bevorzugt mehrere Absperr- und Regelventile in dem Leitungsnetz des Probenahmesystems vorhanden. Zum einen ist stromaufwärts der Verzweigungen in die Bypassstrecke 54, die Filterstrecke 46 und die Analysenstrecke 20 ein einstellbares Absperrventil 60 vorhanden, mit der der Durchfluss durch die Probenahmeleitung 22, sprich der Probenstrom insgesamt eingestellt werden kann. Zum anderen sind die von der Probenahmeleitung 22 abzweigenden Leitungen, die die genannten Funktionsstrecken 20, 46, 54 bilden, selber mit Regelventilen 62 zur Einstellung der jeweiligen Teilströme ausgestattet. Diese Regelventile 62 sind hier im Ausführungsbeispiel stromabwärts der Funktionseinheiten, sprich stromabwärts der Filter / Sammler 48 und der Analysatoren 18, angeordnet. Zusätzlich oder alternativ können derartige Regel- bzw. Absperrventile stromaufwärts der Funktionseinheiten angeordnet sein, so dass ggf. ein oder mehrere Teilleitungen im laufenden Betrieb strömungsmäßig von der Probenahmeleitung 22 abkoppelbar sind, etwa zu Wartungs- und Austauscharbeiten und zur Inspektion der Filter / Sammler 48. In einer besonders einfachen Ausgestaltung des Systems kann aber auch weitgehend oder sogar vollständig auf Regel- bzw. Absperrventile verzichtet werden, wodurch die Fehleranfälligkeit und der Steueraufwand gesenkt werden. Insbesondere kann bei Verzicht auf das Absperrventil 60 ein aktives Einschalten der Probeentnahme entfallen, da die Probenentnahme dann durch den Ventingstrom passiv selbstregelnd erfolgt und somit automatisch aktiviert wird.

Des Weiteren kann das Absperrventil 60 in der Probenahmeleitung 22 wie in FIG. 1 angedeutet als 3-Wege-Ventil mit einem zusätzlichen Leitungsanschluss, nämlich für eine Inertgasleitung 64 oder eine Spülgasleitung, ausgebildet sein. Beispielsweise kann damit bedarfsweise ein Inertgas oder Spülgas, insbesondere Stickstoff N₂, aus einem unter Druck stehenden Vorratsbehälter 66, etwa einer Druckgasflasche, in die Probenahmeleitung 22 eingeleitet und dem Probenstrom beigemengt werden. Bei entsprechend gewählter Ventilstellung des 3-WegeVentils 60 kann auch ausschließlich das Inertgas oder Spülgas durch den nachfolgenden Abschnitt der Probenahmeleitung 22 geleitet werden. In ähnlicher Weise können die einzelnen Teilleitungen der Funktionstrecken Leitungsanschlüsse 67 für im Bedarfsfall einzuspeisende Inertgase, Spülgase oder auch Reagenzien zur chemischen Konditionierung des jeweiligen Teilstroms aufweisen. Eine Steuerung oder Regelung der maßgeblichen Ventile erfolgt vorzugsweise über die zentrale Steuereinheit 18, hilfsweise manuell.

Für eine möglichst zuverlässige Messung der interessierenden Aktivitäten und Gaszusammensetzungen sind eine Auskondensation dampfförmiger Anteile im Probenstrom und eine Ablagerung von Aerosolen auf dem Weg zu den Filtern / Sammlern 48 der Filterstrecke 46 und den Analysatoren 18 der Analysenstrecke 20 möglichst vollständig zu vermeiden.

Zu diesem Zweck ist im Standby-Betrieb des Emissionsüberwachungssystems 2, also im Normalbetrieb des Kernkraftwerks 4, eine Vorheizung der Probenahmeleitung 22 und der zu den Filtern 48 und Analysatoren 18 führenden Teilleitungen zumindest an ausgewählten Leitungsabschnitten und ggf. an den Filtern 48 und Analysatoren 18 selber vorgesehen. Diese Standby-Beheizung ist bei dem Emissionsüberwachungssystem 2 gemäß FIG. 1 durch eine elektrische Rohrbegleitheizung verwirklicht, die normalerweise durch das gewöhnliche Anlagenstromnetz 40 des Kernkraftwerks 4 mit Betriebsstrom beaufschlagt wird. Die zugehörigen, um die Rohrleitungen gelegten oder in die Rohrwände integrierten Heizspiralen / Heizelemente 68 sind in FIG. 1 nur exemplarisch an einigen Stellen des Leitungsnetzes angedeutet. Die Heizleistung des gesamten Heizungssystems ist auf eine zu gewährleistende Temperatur des Probenstroms oberhalb der bei Messbetrieb zu erwartenden Taupunkttemperatur ausgelegt (ca. > 150 - 200 °C).

Bei einer sogenannten Station-Blackout Situation mit Ausfall des gewöhnlichen Anlagenstromnetzes 40, die typischerweise gerade bei der Aktivierung oder beim Betrieb des Emissionsüberwachungssystems 2 vorliegt, übernimmt das bereits erwähnte Notstromnetz 42 auf Basis einer Batterieeinheit, einer Brennstoffzelleneinheit oder eines Dieselaggregats zumindest anfänglich die Stromversorgung der elektrischen Rohrbeheizung und damit die Kompensation der unvermeidlichen Wärmeverluste beim Probentransport.

Um die Wärmeverluste möglichst klein zu halten (ca. < 500 W), sind die Probenahmeleitung 22, die von ihr abzweigenden Teilleitungen zu den Funktionseinheiten (Filter / Sammler 48 und Analysatoren 18) und die Funktionseinheiten selber möglichst vollständig, zumindest aber in einigen relevanten Abschnitten und Bereichen mit einer thermischen Isolierung, insbesondere in Form einer Isolierummantelung 70, versehen, die in FIG. 1 lediglich an einigen Stellen schematisch angedeutet ist. Darüber hinaus erfolgt bevorzugt eine Verwendung von schlecht wärmeleitenden Materialien im Bereich der Rohrwände oder Gehäusewände.

Zur Vermeidung von Aerosolablagerung an den Wänden des Strömungsweges werden die Probenahmeleitung 22 und die von ihr abzweigenden Teilleitungen zu den Funktionseinheiten vorzugsweise mit innenseitiger Teflonbeschichtung oder Aluminiumbeschichtung oder in hydraulisch glattem, elektropoliertem Edelstahl ausgeführt.

Um die Kapazitätsanforderungen an die Notstromversorgung 42 bzw. an deren Energiespeicher möglichst gering zu halten und dennoch eine zuverlässigen Probentransport zu den Funktionsmodulen unter Verhinderung von Dampfkondensation sicherzustellen, ist eine Reihe von Maßnahmen vorgesehen, die die Auslegung des Emissionsüberwachungssystems 2 gemäß FIG. 1 hin zu einem weitgehend passiven bzw. semi-passiven System bewerkstelligen (die Auswerte- und Steuereinheit 38 und die Analysatoren 18 benötigen natürlich im Regelfall eine gewisse Menge an elektrischen Strom, so dass völlige Passivität im Sinne einer kompletten Abkopplung vom Notstromnetz 42 bei dieser Variante nur schwer realisierbar ist). Diese Maßnahmen werden nun im Detail beschrieben.

Zum einen ist in der den Ventstrom führenden Druckentlastungsleitung 8 ein Drosselabschnitt, hier in Gestalt einer Drosselblende 72 angeordnet. Stromaufwärts der Drosselblende 72 entspricht der Gasdruck annähernd dem Containment-Innendruck des Kernkraftwerks 4 von zu Beginn des Ventings typischerweise 3 bis 6 bar absolut, ggf. vermindert um einen Druckabfall von bis zu 1 oder 2 bar in den strömungsmäßig vorgeschalteten Leitungsabschnitten inkl. Filter- und/oder Wäschereinheiten. Durch die Drosselblende 72 erfolgt eine Druckabsenkung auf annähernd den Umgebungsdruck von rund 1 bar absolut. Man kann daher von einem Hochdruckabschnitt 74 der Druckentlastungsleitung 8 stromaufwärts der Drosselblende 72 und einem Niederdruckabschnitt 76 stromabwärts der Drosselblende 72 sprechen.

Durch die Drosselung erfolgt eine passive Trocknung und Überhitzung des Ventstroms, so dass im Probenahmebetrieb bei geöffnetem Absperrventil 60 in der Probenahmeleitung 22 durch die vorzugsweise stromabwärts der Drosselblende 72 angeordnete Entnahmedüse 24 eine überhitzte Probe in die Probenahmeleitung 22 eingeleitet wird, deren Dampfanteil bereits einen hinreichenden Taupunktabstand (mit relativer Feuchte < 1) besitzt.

Darüber hinaus wird durch eine in die von den Filtern 48 und den Analysatoren 18 wegführende Sammelleitung 56 geschaltete Saugpumpe 58 ein den Probentransport antreibender bzw. unterstützender Unterdruck in den stromaufwärtigen Abschnitten des für die Probenahme und Analyse vorgesehenen Leitungssystems erzeugt. Durch den Unterdruck wird der Dampfanteil im Probenstrom durch isenthalpe Entspannung weiter in das Überhitzungsgebiet des die Thermodynamik beschreibenden Phasendiagramms geführt. Die Taupunkttemperatur wird hierdurch unter die herrschende Sattdampftemperatur vor der Drosselblende 72 abgesenkt. Durch die jetzt mit isenthalp entspanntem Eigenmedium beheizte Probenahmeleitung 22 inkl. Filterstrecke 46 sowie Analysestrecke 20 kann die elektrische Beheizung vollständig deaktiviert und aus der Energiebilanz herausgenommen werden. Probeentnahme sowie Beheizung erfolgen jetzt-jedenfalls nach einer kurzen anfänglichen Anlaufphase, in der die elektrische Beheizung unter Umständen noch ergänzend zugeschaltet sein kann - über den gesamten Ventingvorgang völlig passiv.

Die Saugpumpe 58 kann prinzipiell eine elektrisch angetriebene Pumpe sein, die über das Anlagenstromnetz 40 oder das Notstromnetz 42 des Kernkraftwerks 4 mit Betriebsstrom versorgt wird. Im Sinne der angestrebten passiven Systemauslegung ist es aber besonders vorteilhaft, wenn sie durch die vorhandene Strömungsenergie des Ventstroms in der Druckentlastungsleitung 8, wie sie insbesondere in dessen Hochdruckabschnitt vorliegt, angetrieben wird.

Zu diesem Zweck ist die Saugpumpe 58 des Emissionsüberwachungssystems 2 gemäß FIG. 1 als Strahlpumpe 78, gelegentlich auch als Jetpumpe oder Ejektor bezeichnet, ausgeführt. Als Treibmittel wird ein Teilstrom des Ventstroms aus dem Hochdruckabschnitt 74 - also aus dem Abschnitt stromaufwärts der Drosselblende 72 - der Druckentlastungsleitung 8 des Kernkraftwerks 4 entnommen. Das heißt, es ist eine druckfeste Treibmittelzuleitung 80 aus dem Hochdruckabschnitt 74 der Druckentlastungsleitung 8 zu dem Treibmittelanschluss 82 der Strahlpumpe 78 geführt, die in Strömungsrichtung 83 durchströmt wird. Die Einlassöffnung 84 der Treibmittelzuleitung 80 kann wie in FIG. 1 angedeutet als einfache Abzweigung von der Druckentlastungsleitung 8 oder wie bei der bevorzugten Ausgestaltung der Probenahmeleitung 22 als in den Strömungskanal hineinragende Entnahmedüse ausgebildet sein.

Die Sammelleitung bzw. Proberückleitung 56 für den Probenstrom ausgangsseitig der Filterstrecke 46, der Analysestrecke 20 und ggf. der Bypassstrecke 54 des Probenahmeleitungssystems ist an den Sauganschluss 86 bzw. Saugstutzen der Strahlpumpe 78 angeschlossen. An den Austrittsanschluss 88 der Strahlpumpe 78 ist eine Austrittsleitung oder Rückleitung 90 angeschlossen, die in bevorzugter Ausgestaltung am anderen Ende, dem Auslassende 91, in die Druckentlastungsleitung 8 zurückgeführt ist, und zwar in deren Niederdruckabschnitt 76 stromabwärts der Drosselblende 72, insbesondere stromabwärts der Entnahmedüse 24 der Probenahmeleitung 22.

Die Strahlpumpe 78 kann in konventioneller Bauart ausgeführt sein und am Treibmitteleinlass eine Treibdüse 92, weiter stromabwärts eine Mischkammer 94, in der der Treibmittelstrahl auf das aus der Umfangsregion angesaugte Saugmittel trifft, und austrittsseitig einen optionalen Diffusor 96 für eine partielle Druckrückgewinnung aufweisen, wie in dem Detail D von FIG. 1 angedeutet ist. Alternativ ist auch eine Gestaltung nach Art einer einfachen Venturidüse 97 möglich, an deren Verengungsstelle oder Kehle 98 der Sauganschluss 86 als Öffnung in der Rohrwand ausgebildet ist. Ein derartiges Design ist in dem Detail E von FIG. 2 dargestellt (die dort zusätzlich abgebildete, optionale Umhüllung der Probenahmeleitung 22 durch ein Mantelrohr wird weiter unten genauer beschrieben).

Gemäß dem bekannten Funktionsprinzip der Strahlpumpe 78 wird in deren Düsensektion oder Kehle 98 durch die Umwandlung von Druckenergie in Strömungsgeschwindigkeit ein Unterdruck zur Ansaugung des Probenstromes erzeugt. Der angesaugte Probenstrom wird hauptsächlich durch Impulsübertrag vom Treibmittelstrom mitgerissen und vermischt sich dabei mit diesem. Das entstehende, auf relativ niedrigem Druck befindliche Gemisch von Treibmittel und Saugmittel - hier in beiden Fällen Teilströme des Ventstroms - verlässt die Strahlpumpe 78 dann über deren Austrittsanschluss 88 und die daran angeschlossene Rückleitung 90 und wird wie oben bereits beschrieben vorteilhafterweise wieder mit dem restlichen Ventstrom vereinigt und zusammen mit diesem in die Umgebung entlassen. Die Probeentnahme und der Probentransport erfolgen somit völlig passiv durch die vorhandene Strömungsenergie des Ventstroms, wobei überdies eine passive Überhitzung des Probenstromes sichergestellt wird.

Die in FIG. 2 dargestellte Variante des Emissionsüberwachungssystems 2 unterscheidet sich wie folgt von der in FIG. 1 dargestellten Variante:
Zum einen ist hier kein online erfolgendes Aerosol-/Jodmonitoring vorgesehen. Die Analysenstrecke 20 entfällt also. Die Bypassstrecke 54 ist ebenfalls nicht vorhanden. Lediglich die Filterstrecke 46 mit Aerosolfiltern 50 und/oder Jodfiltern 52 ist verwirklicht. Anstelle von einem Emissionsüberwachungssystem 2 kann man in dieser Variante auch von einem Emissionsdokumentationssystem sprechen. Derartige Abwandlungen könnten natürlich auch in der Variante gemäß FIG. 1 verwirklich sein.

Darüber hinaus ist nun die gesamte Probenahmeleitung 22 von der Entnahmedüse 24 über die Aerosolfilter 50 und/oder Jodfilter 52 bis hin zum Sauganschluss 86 der Strahlpumpe 78 in einem umhüllenden Mantelrohr 100 geführt, so dass der Zwischenraum zwischen der Außenwand des Probenahmerohres 102 und der der Innenwand des Mantelrohres 100 von einem Heizmedium durchströmbar ist. Das Probenahmerohr 102 wird bei dieser Ausführung zweckmäßigerweise mit einem hoch wärmeleitenden Material (z. B. Aluminium) ausgeführt, während das Mantelrohr 100 bevorzugt schlecht wärmeleitend und/oder mit einem Wärmeisolationsmantel 104 versehen ist, um einerseits den Wärmeübergang vom Heizmedium auf den Probenstrom zu begünstigen und andererseits die Wärmeabgabe an die äußere Umgebung zu minimieren.

Als Heizmedium wird vorteilhafterweise ein Teilstrom des Ventstroms aus der Ventleitung 8 abgezweigt. Zu diesem Zweck weist das Mantelrohr 100 beispielsweise, wie im Detail F dargestellt, im Bereich der Entnahmedüse 24 der Probenahmeleitung 22 eine ringförmige Einlassöffnung 106 für das vergleichsweise warme Ventgas auf. In dieser Ausführung kann also bereits die Entnahmedüse 24 beheizt werden. Das als Heizmedium wirksame Ventgas durchströmt anschließend den Zwischenraum zwischen Probenahmerohr 102 und Mantelrohr 100 im Gleichstrom zum Probenstrom und bewirkt so die gewünschte Überhitzung der Probe in der Probenahmeleitung 22 inklusive der darin enthaltenen Filtersektion mit den Filtern / Sammlern 48. Stromabwärts der Filtersektion werden der Heizstrom und der Probenstrom zweckmäßigerweise zusammengeführt, etwa wie im Detail E dargestellt durch einen schlitzförmigen Übertritt 108 in der Rohrwand des Probenahmerohres 102, und nach / unter gegenseitiger Vermischung gemeinsam am Sauganschluss 86 der Strahlpumpe 78 angesaugt. Zur Vermeidung von unerwünschter Rückströmung in das Probenahmerohr 102 kann stromaufwärts des Übertritts 108 eine Drosselblende 109 in dem Probenahmerohr 102 angeordnet sein.

Insbesondere kann auf die beschriebene Weise bei noch geschlossener Probenahmeleitung 22 im Standby-Betrieb des Emissionsüberwachungssystems 2 eine Vorheizung der Probenahmeleitung 22 durch rein passives Ansaugen des heißen Ventgasstromes über das Mantelrohr 100 erfolgen. Auch später im eigentlichen Probenahmebetrieb bei geöffneter Probenahmeleitung 22 wird diese Beheizung aufrechterhalten. Auf eine elektrische Vorbeheizung der Probenahmeleitung 22, die in FIG. 2 durch optionale Heizelemente 110 angedeutet ist, kann bei geeigneter Auslegung und Dimensionierung der Strömungs- und Temperaturverhältnisse völlig verzichtet werden.

Eine derartige Ausgestaltung der Rohrbeheizung mit Mantelrohren 100, die vom Ventgas durchströmt werden, ist prinzipiell auch bei der komplexeren Systemvariante gemäß FIG. 1 möglich, zumindest für einzelne Teilleitungen. Eine vollständige Abdeckung des Heizbedarfs auf diese Weise ist allerdings gerade im Hinblick auf die Analysestrecke 20 schwieriger zu erreichen. Wegen der Vielzahl von Rohrverzweigungen und Zusammenführungen wäre dort auch der konstruktive Aufwand beträchtlich, so dass sich diese Ausgestaltung eher für einfach gehaltene Systeme wie in FIG. 2 anbietet.

Wie bereits erwähnt, können verschiedene Kombinationen der in FIG. 1 und FIG. 2 vorhandenen Einzelkomponenten und Teilstrecken implementiert werden. Ein Schwerpunkt bei der Online-Messwerterfassung wird insbesondere auf die emittierten radioaktiven Edelgase gelegt. Der vorteilhafterweise in der Analysenstrecke 20 angeordnete Edelgasanalysator 32 weist zu diesem Zweck beispielsweise einen robusten Gammasensor auf. Die vom Edelgasanalysator 32 vorzugsweise kontinuierlich aufgenommenen und online übermittelten Messwerte ermöglichen Rückschlüsse auf die Massenströme und Konzentration der im Ventstrom enthaltenen Edelgase und auf die entsprechenden nuklidspezifischen Aktivitätsraten. Daraus kann dann im Sinne einer modelmäßigen Überschlagsrechnung oder Simulation zeitnah (idealerweise quasi in Echtzeit) die Menge der im Ventstrom enthaltenen radioaktiven Aerosole und Jodbestandteile sowie deren Beitrag zur Aktivitätsfreisetzung ermittelt werden, ohne für diese Bestandteile selber ein Online-Monitoring durchführen zu müssen. Hierfür stehen ausgefeilte Simulationsprogramme und dergleichen zur Verfügung, die den jeweiligen Reaktortyp berücksichtigen. Das heißt, die online arbeitenden Aerosolanalysatoren 28 und die Jodanalysatoren 30 aus FIG. 1 können ggf. entfallen, ohne dadurch wesentliche Einbußen hinsichtlich der Analysequalität hinnehmen zu müssen.

Nichtsdestotrotz kann während des Ventings eine repräsentative Probensammlung hinsichtlich der Aerosol- und Jodbestandteile sowie ggf. H-3 und C-14 in den Filtern / Sammlern 48 der Filterstrecke 46 erfolgen, die für entsprechend hohe Temperaturen und Drücke des Probenstroms ausgelegt und somit ausgesprochen robust sind. Nach Beendigung des Ventprozesses kann dann eine Auswertung der gesammelten Aktivitäten in einem Labor erfolgen (insbesondere zur Dokumentation bzw. Beweissicherung der Aktivitätsabgaben). Anhand dieser nachträglichen Auswertung kann ggf. eine Korrektur der zuvor online erfassten Messwerte und/oder der anhand von Modellen berechneten nuklidspezifischen Ausströmungs- und Aktivitätsraten erfolgen. Dadurch wird auch dem Umstand Rechnung getragen, dass die für die Bewertung der Umweltbelastung besonders wichtigen langlebigen radioaktiven Isotope, wie z. B. I-131 oder Cs-137, während des Ventings möglicherweise nur schwer direkt messtechnisch erfassbar sind, weil die kurzlebigen Edelgas-Zerfallsprodukte wie Rb-88 oder Cs-138 zu diesem Zeitpunkt den Ventstrom strahlungsmäßig dominieren.

### Bezugszeichenliste

- 2: Emissionsüberwachungssystem
- 4: Kernkraftwerk
- 6: Sicherheitsbehälter / Containment
- 8: Druckentlastungsleitung / Ventleitung
- 10: Absperrarmatur
- 12: Strömungsrichtung
- 14: Kamin
- 16: Ventingsystem
- 18: Analysator
- 20: Analysenstrecke
- 22: Probenahmeleitung
- 24: Entnahmedüse
- 26: Einlassöffnung / Einlassmündung
- 27: Strömungsrichtung
- 28: Aerosolanalysator
- 30: Jodanalysator
- 32: Edelgasanalysator
- 34: Wasserstoffanalysator
- 36: Signalleitung
- 38: Steuer- und/oder Auswerteeinheit
- 40: Anlagenstromnetz
- 42: Notstromnetz
- 44: Batterie / Akkumulator
- 46: Filterstrecke
- 48: Filter / Sammler
- 50: Aerosolfilter
- 52: Jodfilter
- 54: Bypassstrecke
- 56: Sammelleitung / Proberückleitung
- 58: Saugpumpe
- 60: Absperrventil / 3-Wege-Ventil
- 62: Regelventil
- 64: Inertgasleitung / Spülgasleitung
- 66: Vorratsbehälter
- 67: Leitungsanschluss
- 68: Heizspirale / Heizelement
- 70: Isolierummantelung
- 72: Drosselblende
- 74: Hochdruckabschnitt
- 76: Niederdruckabschnitt
- 78: Strahlpumpe
- 80: Treibmittelzuleitung
- 82: Treibmittelanschluss
- 83: Strömungsrichtung
- 84: Einlassöffnung
- 86: Sauganschluss
- 88: Austrittsanschluss
- 90: Rückleitung
- 91: Auslassende / Auslassmündung
- 92: Treibdüse
- 94: Mischkammer
- 96: Diffusor
- 97: Venturidüse
- 98: Kehle
- 100: Mantelrohr
- 102: Probenahmerohr
- 104: Wärmeisolationsmantel
- 106: Einlassöffnung
- 108: Übertritt
- 109: Drosselblende
- 110: Heizelement
- 112: Aerosol-/Jodmonitor

- M: Online Monitoring
- N₂: Stickstoff
- D, E, F: Details

## Patentansprüche

1. Kernkraftwerk (4) mit einem Containment (6), einem Ventingsystem (16) und einem Emissionsüberwachungssystem (2) für das Ventingsystem (16), mit
• einer an das Containment (6) angeschlossenen Druckentlastungsleitung (8) mit einem Hochdruckabschnitt (74) und einem Niederdruckabschnitt (76),
• einer einlassseitig in die Druckentlastungsleitung (8) mündenden und von dort zu einer von einem Probenstrom durchströmbaren Funktionsstrecke (20, 46) geführten Probenahmeleitung (22),
**dadurch gekennzeichnet, dass** die Probenahmeleitung (22) einlassseitig in den Niederdruckabschnitt (76) der Druckentlastungsleitung (8) mündet, und durch das Vorhandensein
• einer Strahlpumpe (78) mit einem Treibmittelanschluss (82), einem Sauganschluss (86) und einem Austrittsanschluss (88),
• einer einlassseitig in den Hochdruckabschnitt (74) der Druckentlastungsleitung (8) mündenden und von dort zur Strahlpumpe (78) geführten und mit dem Treibmittelanschluss (82) verbundenen Treibmittelzuleitung (80), und
• einer von der Funktionstrecke (20, 46) zur Strahlpumpe (78) geführten und mit dem Sauganschluss (86) verbundenen Proberückleitung (56).

2. Kernkraftwerk (4) nach Anspruch 1, wobei von dem Austrittsanschluss (88) der Strahlpumpe (78) eine Rückleitung (90) in den Niederdruckabschnitt (76) der Druckentlastungsleitung (8) geführt ist und dort auslassseitig einmündet.

3. Kernkraftwerk (4) nach Anspruch 2, wobei die Auslassmündung (91) der Rückleitung (90) in Strömungsrichtung (12) des Ventstroms in der Druckentlastungsleitung (8) gesehen hinter der Einlassmündung (84) der Probenahmeleitung (22) angeordnet ist.

4. Kernkraftwerk (4) nach einem der Ansprüche 1 bis 3, wobei die Probenahmeleitung (22) und ggf. die Proberückleitung (56) in einem Mantelrohr (100) geführt sind, welches von einem Heizmedium durchströmbar ist.

5. Kernkraftwerk (4) nach Anspruch 4, wobei das Mantelrohr (100) derart beschaffen ist, dass ein abgezweigter Teilstrom des Ventstroms in der Druckentlastungsleitung (22) als Heizmedium wirksam ist.

6. Kernkraftwerk (4) nach Anspruch 5, wobei das Heizmedium im Gleichstrom zum Probenstrom gerichtet ist.

7. Kernkraftwerk (4) nach einem der vorherigen Ansprüche, wobei die Funktionsstrecke (20, 46) außerhalb der Druckentlastungsleitung (22) angeordnet ist.

8. Kernkraftwerk (4) nach einem der vorherigen Ansprüche, wobei die Funktionsstrecke eine Filterstrecke (46) mit einem Aerosolfilter (50) und/oder einem Jodfilter (52) umfasst.

9. Kernkraftwerk (4) nach einem der vorherigen Ansprüche, wobei die Funktionsstrecke eine Analysestrecke (20) mit einer Anzahl von Online-Analysatoren (18) aus der Gruppe Aerosolanalysator (28), Edelgasanalysator (32), Jodanalysator (30) umfasst, welche für eine Erfassung der zugehörigen radiologischen Aktivitäten konfiguriert sind.

10. Kernkraftwerk (4) nach einem der vorherigen Ansprüche, wobei zwischen dem Hochdruckabschnitt (74) und dem Niederdruckabschnitt (76) ein Drosselabschnitt, insbesondere in Gestalt einer Drosselblende (72), liegt.

## Claims

1. A nuclear power plant (4) having a containment (6), a venting system (16), and an emission-monitoring system (2) for the venting system (16), having
• a pressure-relief line (8) which is connected to the containment (6) and which comprises a high-pressure section (74) and a low-pressure section (76),
• a sampling line (22) which runs on the inlet side into the pressure-relief line (8) and is guided from there to a functional section (20, 46) which can be flowed through by a sample flow,
**characterized in that** the sampling line (22) runs on the inlet side into the low-pressure section (76) of the pressure-relief line (8), and by the presence
• of a jet pump (78) having a working-fluid connection (82), a suction connection (86), and an outlet connection,
• a working-fluid line (80) which runs on the inlet side into the high-pressure section (74) of the pressure-relief line (8) and which is guided from there to the jet pump (78) and is connected with the working-fluid connection (82), and
• a sample-return line (56) which is guided from the functional section (20, 46) to the jet pump (78) and is connected with the suction connection (86).

2. The nuclear power plant (4) of claim 1, wherein a return line (90) is guided from the outlet connection (88) of the jet pump (78) into the low-pressure section (76) of the pressure-relief line (8) and there, runs into said low-pressure section (76) on the outlet side.

3. The nuclear power plant (4) of claim 2, wherein the outlet opening (91) of the return line (90) is arranged downstream of the inlet opening (84) of the sampling line (22), viewed in the flow direction (12) of the venting flow in the pressure-relief line (8).

4. The nuclear power plant (4) of any of claims 1 to 3, wherein the sampling line (22) and possibly the sample-return line (56) are guided in a jacket tube (100) which can be flowed through by a heating medium.

5. The nuclear power plant (4) of claim 4, wherein the jacket tube (100) is designed such that a branching-off partial flow of the venting flow is effective in the pressure-relief line (22) as a heating medium.

6. The nuclear power plant (4) of claim 5, wherein the heating medium is directed in parallel flow to the sample flow.

7. The nuclear power plant (4) of any of the preceding claims, wherein the functional section (20, 46) is arranged outside the pressure-relief line (22).

8. The nuclear power plant (4) of any of the preceding claims, wherein the functional section (20, 46) is a filtering section (46) having an aerosol filter (50) and/or a iodine filter (52).

9. The nuclear power plant (4) of any of the preceding claims, wherein the functional section comprises an analyzing section (20) having a number of online analyzers (18) from the group consisting of aerosol analyzer (28), inert-gas analyzer (32), iodine analyzer (30), which are configured for detecting the associated radiological activities.

10. The nuclear power plant (4) of any of the preceding claims, wherein a trottling section, in particular in the form of a throttle diaphragm (72), lies between the high-pressure section (74) and the low-pressure section (76).

## Revendications

1. Centrale nucléaire (4) ayant un confinement (6), un système de ventilation (16) et un système de monitorage d'émissions (2) pour le système de ventilation (16), ayant
• une conduite de décompression (8) qui est raccordée au confinement (6) et qui comprend une section haute pression (74) et une section basse pression (76),
• une conduite de prélèvement (22) qui débouche, sur le côté d'entrée, dans la conduite de décompression (8) et est guidée de là vers une section fonctionnelle (20, 46) qui peut être parcourue par un courant de prélèvement,
**caractérisée en ce que** la conduite de prélèvement (22) débouche, sur le côté d'entrée, dans la section basse pression (76) de la conduite de décompression (8), et par la présence
• d'une pompe à jet (78) ayant un raccord de fluide moteur (82), un raccord d'aspiration (86) et un raccord de sortie,
• d'une conduite de fluide moteur (80) qui débouche, sur le côté d'entrée, dans la section haute pression (74) de la conduite de décompression (8) et qui est guidée de là vers la pompe à jet (78) et est raccordée au raccord de fluide moteur (82), et
• d'une conduite de retour de prélèvement (56) qui est guidée de la section fonctionnelle (20, 46) vers la pompe à jet (78) et est raccordée au raccord d'aspiration (86).

2. Centrale nucléaire (4) selon la revendication 1, dans laquelle une conduite de retour (90) est guidée du raccord de sortie (88) de la pompe à jet (78) vers la section basse pression (76) de la conduite de décompression (8) et là débouche dans dite section basse pression (76) sur le côté de sortie.

3. Centrale nucléaire (4) selon la revendication 2, dans laquelle l'ouverture de sortie (91) de la conduite de retour (90) est disposée en aval de l'ouverture d'entrée (84) de la conduite de prélèvement (22), vu en direction du courant (12) du courant de ventilation dans la conduite de décompression (8).

4. Centrale nucléaire (4) de l'une quelconque des revendications 1 à 3, dans laquelle la conduite de prélèvement (22) et, le cas échéant, la conduite de retour de prélèvement (56) sont guidées dans un tube enveloppe (100) qui peut être parcouru par un milieu de chauffage.

5. Centrale nucléaire (4) selon la revendication 4, dans laquelle le tube enveloppe (100) est conçu de manière qu'un courant partiel branchant du courant de ventilation est effectif dans la conduite de décompression (22) comme milieu de chauffage.

6. Centrale nucléaire (4) selon la revendication 5, dans laquelle le milieu de chauffage est dirigé en courant parallèle au courant de prélèvement.

7. Centrale nucléaire (4) de l'une quelconque des revendications précédentes, dans laquelle la section fonctionnelle (20, 46) est disposée à l'extérieur de la conduite de décompression (22).

8. Centrale nucléaire (4) de l'une quelconque des revendications précédentes, dans laquelle la section fonctionnelle (20, 46) est une section de filtrage (46) ayant un filtre d'aérosols (50) et/or un filtre d'iode (52).

9. Centrale nucléaire (4) de l'une quelconque des revendications précédentes, dans laquelle la section fonctionnelle comprend une section d'analyse (20) ayant un nombre d'analyseurs on-line (18) du groupe comprenant un analyseur d'aérosols (28), un analyseur de gaz inerte (32), un analyseur d'iode (30), qui sont configurés pour détecter les activités radiologiques y appartenant.

10. Centrale nucléaire (4) de l'une quelconque des revendications précédentes, dans laquelle une section d'étranglement, en particulier sous forme d'un diaphragme d'étranglement (72) se trouve entre la section haute pression (74) et la section basse pression (76).
